# EUROPÄISCHE PATENTSCHRIFT

(11) **EP 2 634 542 B1**
(45) Veröffentlichungstag und Bekanntmachung des Hinweises auf die Patenterteilung: **15.05.2019**
(21) Anmeldenummer: 12157961.9
(22) Anmeldetag: 02.03.2012
(51) Int. Cl.: G01F 23/288, F28D 1/06, F25D 17/02

(54) **Füllstandmessgerät mit Kühlkompresse, Verwendung einer Kühlkompresse, und Verfahren zum Temperieren eines Detektors mittels einer Kühlkompresse**
Level measuring device with a cooling compress, use of a cooling compress, and method of controlling the temperature of a detector with the help of a cooling compress
Dispositif de mesure de niveau de liquide avec une compresse de refroidissement, utilisation d'une compresse de refroidissement, et procédé de contrôle de la température d'un détecteur à l'aide d'une compresse de refroidissement

(43) Veröffentlichungstag der Anmeldung: 04.09.2013
(73) Patentinhaber: VEGA Grieshaber KG, 77709 Wolfach (DE)
(72) Erfinder: Becherer, Frank, 77743 Neuried (DE); Rauer, Winfried, 77716 Fischerbach (DE)
(74) Vertreter: Maiwald Patent- und Rechtsanwaltsgesellschaft mbH

(56) Entgegenhaltungen:
- EP-A1- 0 075 457
- DE-T2- 60 030 419
- DE-U1-202009 007 604
- GB-A- 1 153 472
- GB-A- 1 277 318
- US-A1- 2007 161 932

## Beschreibung

### Gebiet der Erfindung

Die Erfindung betrifft die Kühlung von Geräten. Insbesondere betrifft die Erfindung ein Füllstandsmessgerät mit einer Kühlkompresse und eine Verwendung einer Kühlkompresse zur Kühlung eines Gehäuses eines Messgerätes. Weiterhin betrifft die Erfindung ein Verfahren zum Temperieren eines Detektors mit Hilfe einer Kühlkompresse.

### Technologischer Hintergrund

Eine Vielzahl von technischen Geräten, insbesondere Messgeräte oder Sensoren, erfordern zur einwandfreien Funktion eine zusätzliche Kühlung oder Erwärmung über die Außenseite des Gerätegehäuses. Diese Geräte können aus allen Einsatzgebieten stammen, bei denen für eine zweckgemäße Funktion ein bestimmter Temperaturbereich eingehalten werden muss. Eine Kühlung oder Erwärmung kann aufgrund des Aufbaus und der Komponenten des Gerätes selbst, wie beispielsweise bei der radiometrischen Füllstandsmessung, erforderlich werden aber auch aufgrund des Einsatzortes, beispielsweise der Betrieb unter extremen klimatischen Bedingungen. Dies kann die Notwendigkeit einer Kühlung, aber auch einer Erwärmung bedeuten.

Dies wird in vielen Fällen über ein externes temperierendes System, beispielsweise ein Kühlaggregat oder ein Heizsystem erreicht. Hier wird die Wärmeenergie mithilfe eines geeigneten Mediums, wie beispielsweise eines Fluids, transportiert.

Die bisher bekannten Lösungen im Bereich der Füllstandsmessung, beispielsweise in Form von wasserdurchfluteten, konzentrischen, doppelwandigen Rohren, erfordern für komplexe Oberflächenstrukturen von Gehäusen und Behältern, beispielsweise Erhebungen, Anschlüsse, Anzeigen oder mechanische Befestigungsvorrichtungen, eine technisch oft aufwendige und damit kostenintensive Anpassung des temperierenden Systems, um weiterhin den notwendigen Zugang zu den Funktionselementen auf der Geräteoberfläche sicherzustellen.

DE 20 2009 007 604 U1 beschreibt eine Kältepackung, umfassend eine kältehaltige Schicht, gefüllt mit kältehaltendem Material, eine Flüssigkeitsschicht, und einen Innenraum sowie eine Luftsackschicht.

DE 600 30 419 T2 beschreibt eine vakuumunterstützte Verschlussvorrichtung mit einer Heiz- und Kühlvorrichtung für die Heilung von Wunden.

GB 1 277 318 A beschreibt eine Schienungsvorrichtung zur medizinischen Hilfeleistung mit einer aufblasbaren Komponente, die mit einem Fluid gefüllt werden kann.

EP 0 075 457 A1 beschreibt einen radiometrischen Füllstandsdetektor mit einer radioaktiven Quelle und einem Photomultiplier.

GB 1 153 472 A beschreibt ein Verfahren und eine Vorrichtung für das Erwärmen und Kühlen von Flüssigkeiten.

US 2007/0161932 A1 beschreibt ein System und Verfahren zur Anwendung temperaturgeregelter Kompression und Unterstützung verletzter Bereiche des menschlichen Körpers.

### Zusammenfassung der Erfindung

Es ist eine Aufgabe der Erfindung, eine einfache und effektive Kühlung von Geräten zu ermöglichen.

Die Aufgabe wird durch die Merkmale der unabhängigen Patentansprüche gelöst. Weiterbildungen der Erfindung ergeben sich aus den Unteransprüchen und der folgenden Beschreibung.

Gemäß einem ersten Aspekt der Erfindung ist eine Kühlkompresse zum Kühlen eines Detektors eines Füllstandsmessgerätes während einer Füllstandsmessung angegeben. Die Kühlkompresse weist einen Kühlkörper auf, der zumindest teilweise aus einem verformbaren Material besteht. Weiterhin ist der Kühlkörper zum Anbringen an einen Detektor ausgebildet sowie zum Durchströmen mit einem Kühlfluid ausgeführt. Ein Bereich der Innenwandung des Kühlkörpers ist in einer Weise ausgeführt, dass er sich auf einen entsprechenden Bereich der Außenfläche des Detektors zubewegt und einen thermischen Kontakt mit dem entsprechenden Bereich der Außenfläche bildet, wenn die Kühlkompresse an den Detektor angebracht ist und der Kühlkörper von dem Kühlfluid durchströmt wird.

Neben der Möglichkeit des Kühlens kann mit der beschriebenen Vorrichtung auch eine Erwärmung erfolgen. Wenn im Folgenden also von Kühlung die Rede ist, dann schließt dies sowohl die Möglichkeit der Temperierung auf eine Temperatur unter den momentanen Istwert der Temperatur (Kühlung), als auch die Temperierung auf einen Wert über den momentanen Istwert der Temperatur (Erwärmung) ein.

Anstelle zur Kühlung von Teilen von Füllstandsmessgeräten kann die Kühlkompresse auch zur Kühlung von anderen Messgeräten, die verschiedenste physikalische Größen messen können, ausgeführt sein.

Ein Kühlfluid im Sinne dieser Erfindung umfasst ein flüssiges oder gasförmiges Medium, das in der Lage ist, Wärme zu transportieren. So wird in vielen Fällen Wasser, in klimatisch trockenen und heißen geographischen Gebieten auch geeignete Gase als Kühlfluid verwendet.

Der Kühlkörper dient der eigentlichen Temperierung und soll einen möglichst guten Kontakt zur Gehäuseoberfläche aufweisen. Dies wird erfindungsgemäß durch die Verformbarkeit des Kühlkörpers erreicht, der sich so der Geometrie und Beschaffenheit der oftmals unregelmäßigen Oberflächenstruktur anpassen kann. Wenn im Folgenden also von "verformbar" die Rede ist, dann ist die Eigenschaft des Materials gemeint, sich in seiner Form einmalig und dauerhaft (plastisch) oder wiederholt (elastisch, flexibel) einer von außen anliegenden Oberflächenstruktur anpassen zu können. Dadurch mag eine deutliche Erhöhung der Wärmeleitfähigkeit zwischen Gehäuseoberfläche und Kühlkörper erreicht werden. Beispielsweise können Teile der Kühlmanschette aus Materialien wie Polyurethan, insbesondere einem Elastomer, bestehen.

Gemäß einem weiteren Aspekt der Erfindung ist die Kühlkompresse als Manschette zum Stülpen über den Detektor ausgeführt. In diesem Falle weist die Kompresse eine Geometrie auf, die durch die rundum geschlossene Form ein einfaches nachträgliches Anbringen an den Detektor durch Überstülpen ohne aufwendige Befestigungsmechanismen erlaubt. Die Form ist an die Form des Detektors angepasst und beispielsweise hohlzylinderförmig.

Gemäß einem weiteren Aspekt der Erfindung weist die Kühlkompresse eine erste Schicht auf, welche eine Außenwandung der Kühlkompresse ausbildet. Weiterhin weist die Kühlkompresse eine zweite Schicht auf, welche eine Innenwandung der Kühlkompresse ausbildet. Weiterhin ist eine Einleitungsöffnung, eine Ausleitungsöffnung sowie gegebenenfalls eine Befestigungsvorrichtung gegeben. Die erste Schicht und die zweite Schicht sind auf eine Weise miteinander verbunden, dass sie einen Hohlraum zur Aufnahme des Kühlfluids ausbilden. Der Zugang zu diesem Hohlraum erfolgt über die Einleitungsöffnung und/oder die Ausleitungsöffnung.

Das Kühlfluid steht beim Betrieb der Kühlkompresse unter einem Druck, der größer ist, als der Druck des den Kühlkörper umgebenden Mediums.

Die zweite Schicht besteht aus einem verformbaren wärmeleitenden Material. Durch das Einleiten des Kühlfluids vergrößert sich das Volumen der Kompresse.

Die Begriffe Außenwandung und Innenwandung beschreiben die Lage der Wandungen relativ zur Gehäuseoberfläche. Die Einleitungsöffnung und die Ausleitungsöffnung erlauben einen Durchfluss des Kühlfluids durch die Kühlkompresse. Auf diese Weise ist einen Transport der Wärme von oder zur Kühlkompresse möglich.

Die Befestigungsvorrichtung dient zur Herstellung einer mechanischen Verbindung zwischen Kühlkompresse und Detektor.

Der erhöhte Druck des Kühlfluids dient der Erhöhung der Anpresskraft des Kühlkörpers an die Gehäuseoberfläche damit der Verbesserung der thermischen Kopplung. Die Volumenerhöhung der Kühlkompresse durch das in den Hohlraum einströmende Kühlfluid wird durch die Materialeigenschaft der Verformbarkeit, insbesondere der 2. Schicht, erreicht.

Gemäß einem weiteren Aspekt der Erfindung ist die Befestigungsvorrichtung auf eine Weise ausgebildet, dass sie die Kühlkompresse am Detektor hält, wenn die Kühlkompresse am Detektor angebracht ist.

Die Befestigungsvorrichtung dient zur mechanischen Fixierung der Kühlkompresse am Detektorgehäuse. Dies erlaubt den Aufbau eines erhöhten Anpressdrucks der Kühlkompresse an der Detektoroberfläche, indem es die Ausgleichsbewegung der Kühlkompresse weg von der Gehäuseoberfläche mechanisch verhindert.

Die Befestigungsvorrichtung kann in Abhängigkeit der Beschaffenheit und Geometrie des Detektors als Klettverschluss, Lasche, Band, Schraubverbindung, Klebeverbindung, Schnalle, Haken oder Ähnlichem ausgeführt sein.

Gemäß einem weiteren Aspekt der Erfindung weist die erste Schicht auf ihrer Außenseite zusätzlich eine Schicht aus Textilgewebe, Kevlar oder ähnlichem Material auf.

Diese zusätzliche Schicht dient dem mechanischen Schutz der Kühlkompresse vor äußeren mechanischen Einflüssen. Die robuste Struktur der zusätzlichen Schicht dient zur Verhinderung mechanischer und/oder thermischer Beschädigungen an der Kühlkompresse.

Gemäß einem weiteren Aspekt der Erfindung ist die Einleitungsöffnung und/oder die Ausleitungsöffnung als Muffe ausgeführt.

Die Muffe dient zur mechanischen Stabilisierung dieser Öffnungen und erlaubt einen Anschluss von Rohren oder Schläuchen zum Einleiten und Ausleiten des Kühlfluids.

Gemäß einem weiteren Aspekt der Erfindung weist die Kühlkompresse ein elektrisch betriebenes Heizelement zum Erwärmen des Kühlfluids auf.

Das Heizelement im Sinne dieser Erfindung bezeichnet eine Vorrichtung, die durch Umwandlung von beispielsweise elektrischer Energie in Wärmeenergie in der Lage ist, Wärme an das Kühlfluid abzugeben und so das Kühlfluid zu erwärmen. Dieser Aspekt der Erfindung erlaubt die Temperierung oder Erwärmung auf eine Soll-Temperatur über der Ist-Temperatur.

Gemäß einem weiteren Aspekt der Erfindung liegt die Innenwandung an der zu temperierenden Gehäuseoberfläche des Detektors konturnah an, wenn die Kühlkompresse am Detektor angebracht ist.

Konturnah im Sinne dieser Erfindung bezeichnet die möglichst formgenaue Anpassung der Geometrie des Kühlkörpers an die Geometrie der Gehäuseoberfläche. Dies dient der Maximierung der direkt in Kontakt stehenden Flächen von Kühlkörper und Gehäuseoberfläche.

Gemäß einem weiteren Aspekt der Erfindung weist die Kühlkompresse Aussparungen auf, die in einer Weise ausgeführt sind, dass Elemente der Gehäuseoberfläche des Detektors von außen zugänglich sind.

Unter Aussparungen werden im Sinne der Erfindung typischerweise Durchbrüche oder Einbuchtungen verstanden, die auf eine Weise ausgeführt sind, dass sie an den Rändern der Kühlkompresse verklebt, verschweißt, oder in ähnlicher Weise abgedichtet sind, um das Austreten von Kühlfluid zu verhindern.

Diese Aussparungen dienen dazu, insbesondere Elemente, die sich unter der Kühlkompresse befinden, auch nach dem Anbringen der Kühlkompresse weiterhin zugänglich zu halten.

Gemäß einem weiteren Aspekt der Erfindung ist ein Füllstandsmessgerät mit einer oben und im Folgenden beschriebenen Kühlkompresse angegeben.

Gemäß einem weiteren Aspekt der Erfindung ist ein Füllstandsmessgerät angegeben, bei dem die Innenwandung des Kühlkörpers der Kühlkompresse an der zu temperierenden Gehäuseoberfläche des Detektors konturnah anliegt.

Gemäß einem weiteren Aspekt der Erfindung wird die oben und im Folgenden beschriebene Kühlkompresse zur Kühlung eines Gehäuses eines Messgerätes verwendet.

Gemäß einem weiteren Aspekt der Erfindung ist das Gehäuse ein Gehäuse eines Detektors eines Füllstandsmessgerätes.

Gemäß einem weiteren Aspekt der Erfindung wird ein Verfahren zum Temperieren eines Detektors mit einer Kühlkompresse beschrieben. Die Verfahren weist die folgenden Schritte auf:
Anbringen der Kompresse;
Befestigen der Kompresse;
Anschließen der Kompresse;
Inbetriebnahme des Kühlkreislaufs;
Durchströmen der Kühlkompresse mit einem Kühlfluid, wobei der Druck des Kühlfluids innerhalb des Kühlkörpers größer ist als der Druck des den Kühlkörper umgebenden Mediums, wodurch sich zumindest ein Bereich der Innenwandung des Kühlkörpers auf einen entsprechenden Bereich einer Außenfläche des Detektors zubewegt, um einen thermischen Kontakt mit dem entsprechenden Bereich der Außenfläche des Detektors zu bilden, wenn der Kühlkörper von dem Kühlfluid durchströmt wird.

Die ersten vier Schritte sind als fakultativ zu betrachten.

Unter Befestigen der Kompresse ist die mechanische Fixierung der Kompresse mithilfe der beschriebenen Befestigungsvorrichtungen zu verstehen.

Unter dem Anschließen der Kompresse ist das Herstellen der notwendigen Verbindungen für das Kühlfluid an der Eintrittsöffnung und der Austrittsöffnung der Kühlkompresse sowie das Anschließen der restlichen Leitungen für Pumpe, die Druckregelungsvorrichtung und die Kühleinheit zu verstehen. Wenn vorgesehen, schließt dies das Herstellen der elektrischen Anschlüsse für das Heizelement mit ein. Unter dem Begriff der Inbetriebnahme des Kühlkreislaufs ist das Anschalten der Pumpe und die Inbetriebnahme der Kühleinheit zu verstehen. Dies hat zur Folge, dass das Kühlfluid durch die Kühlkompresse, die Pumpe, die Steuer- und Regelungseinheit und die Kühleinheit strömt.

Im Folgenden werden mit Verweis auf die Figuren Ausführungsbeispiele der Erfindung beschrieben.

### Kurze Beschreibung der Figuren

Fig. 1 zeigt eine Messanordnung für die Füllstandsmessung in einem Behälter.
Fig. 2 zeigt eine schematische Darstellung eines Detektors mit einer Kühlkompresse.
Fig. 3 zeigt eine Ausführungsvariante der Kühlkompresse als Manschette gemäß einem Ausführungsbeispiel der Erfindung.
Fig. 4 zeigt eine detaillierte schematische Darstellung des Aufbaus einer Kühlkompresse gemäß einem Ausführungsbeispiel der Erfindung.
Fig. 5 zeigt eine Kühlkompresse mit einem Heizelement gemäß einem Ausführungsbeispiel der Erfindung.
Fig. 6 zeigt ein Flussdiagramm eines Verfahrens zur Temperierung eines Detektors mit einer Kühlkompresse.
Fig. 7 zeigt einen Kühlkreislauf zur Kühlung eines Detektors mit einer Kühlkompresse.

### Detaillierte Beschreibung von Ausführungsbeispielen

Die Darstellungen in den Figuren sind schematisch und nicht maßstabsgetreu.

Werden in der folgenden Figurenbeschreibung gleiche Bezugsziffern verwendet, so betreffen diese gleiche oder ähnliche Elemente.

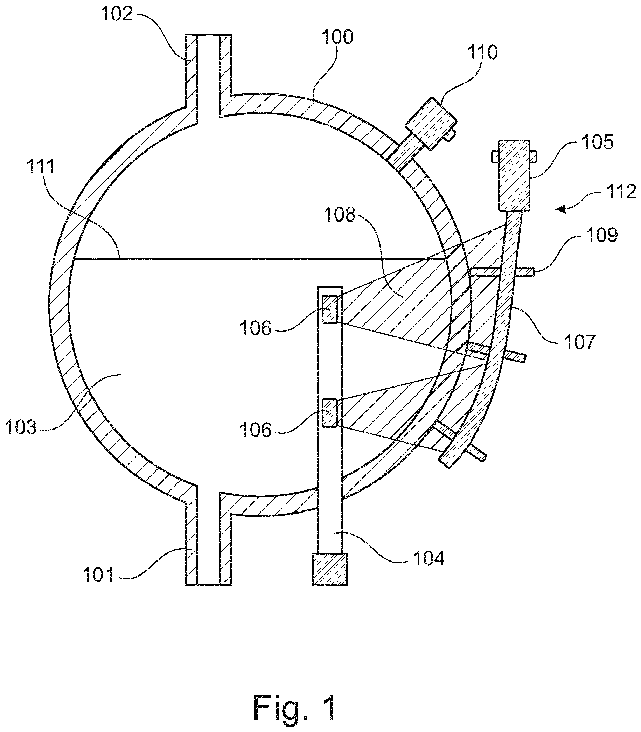

Fig. 1 zeigt eine Anordnung zur Füllstandsmessung in einem Behälter 100 und soll den Kontext des Einsatzes von Füllstandsmessgeräten verdeutlichen. Der Behälter 100 weist einen unteren Zugang 101 und einen oberen Zugang 102 auf, die als Zu- oder Abfluss für die im Behälter 100 enthaltenen Flüssigkeit 103 ausgeführt ist. Die Fig. 1 zeigt beispielhaft zwei Ausführungen von Messgeräten, hier in Form eines radiometrischen Füllstandsmessgerätes 112 und eines Ultraschallfüllstandsmessgerätes 110. Das radiometrische Füllstandsmessgerät 112 weist ein Detektorgehäuse 105 sowie einen Stabdetektor 107 auf, der mit den Befestigungselementen 109 an der Außenseite des Gehäuses des Behälters 100 angebracht ist.

Dieser Detektor dient zur Erfassung der radioaktiven Strahlung 108, die von einer oder mehreren radioaktiven Strahlungsquellen 106 ausgesendet werden. Diese radioaktiven Strahlungsquellen 106 sind auf eine Weise auf einem Träger 104 angebracht, dass die Strahlung durch das zu messende Medium zum Detektor 107 führt. Durch die Messung der am Detektor 107 eintreffenden Strahlungsmenge 108 kann der Füllstand 111 der Flüssigkeit im Behälter 100 berechnet werden. Insbesondere die Detektorgehäuse 105 von radiometrischen Detektoren 112 machen aufgrund ihrer Funktionsweise eine Kühlung notwendig.

Es ist zu beachten, dass die hier dargestellten Ausführungen von Messgeräten und Detektoren lediglich als Beispiele für eine Vielzahl von Messgeräten dienen.

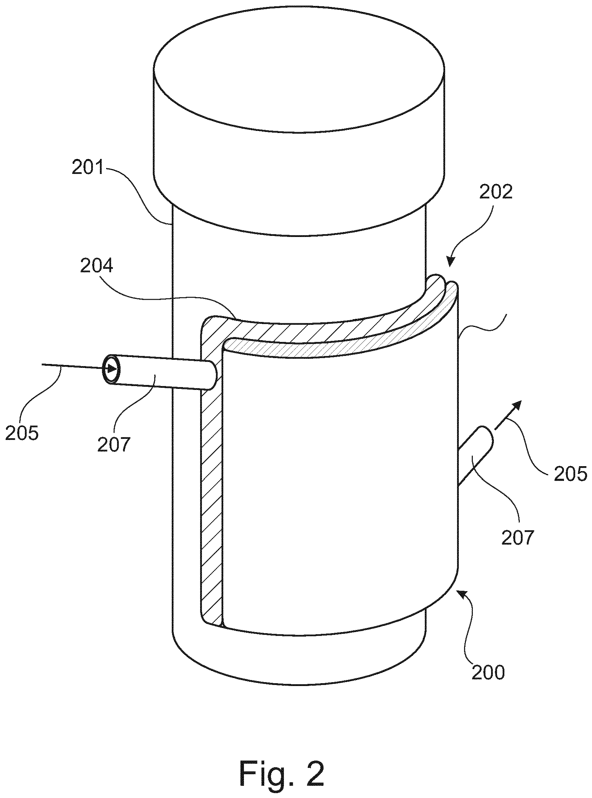

Fig. 2 zeigt eine Anordnung mit einer Kühlkompresse 200 und einem Detektorgehäuses 201, wobei die Kühlkompresse eine erste Schicht 203, eine zweite Schicht 202 sowie die Öffnungen 207 für das Einleiten und Ausleiten des Kühlfluids 205 aufweist. Die zweite Schicht 202 bildet die Innenwandung 204 aus.

Die Kühlkompresse 200 ist auf eine Weise aufgebaut, dass sie, wie in Fig. 2 dargestellt, nur die Teilflächen des Gehäuses 201 abdeckt, die tatsächlich Kühlung erfordern. Die Art der Ausführung der Kühlkompresse 200 erlaubt die Temperierung von Gesamtflächen, aber auch von Teilflächen von Geräteoberflächen. Dies hat den Vorteil, dass durch die Möglichkeit, nur relevante Teilflächen kühlen zu können, die Kompresse 200 material- und kostensparender ausgeführt werden kann. Die Kompresse 200 kann auf verschiedene Weise auf der Oberfläche des Gehäuses 201 befestigt werden. Möglich sind neben den oben beschriebenen Ausführungsformen der Befestigungsvorrichtungen auch das Auflegen der Kompresse 200 auf eine horizontale Gehäuseoberfläche, wobei das Eigengewicht der Kompresse 200 die unerwünschten Verschiebungen der Kühlkompresse 200 verhindert und den Aufbau eines Anpressdrucks an die Gehäuseoberfläche erlaubt.

Im Betrieb wird das Kühlfluid 205 über die Eintritts- und Austrittsöffnung 207 durch die Kühlkompresse 200 gepumpt.

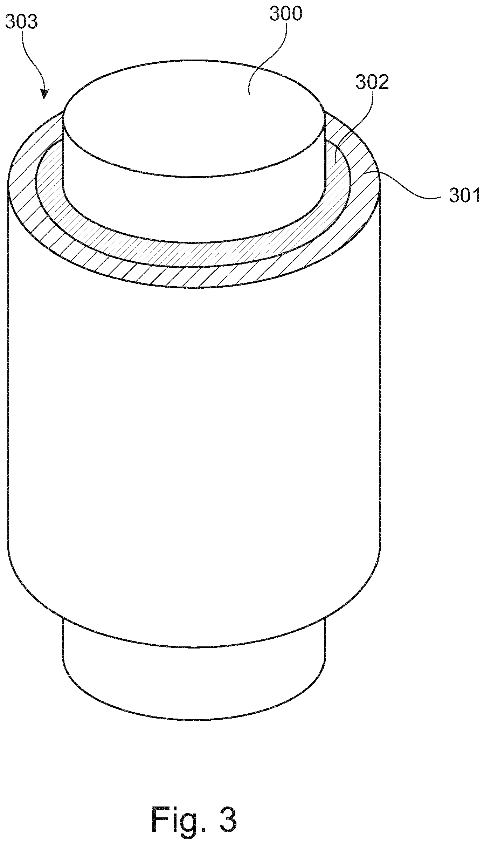

Fig. 3 zeigt gemäß einem Ausführungsbeispiel der Erfindung eine schematische Darstellung eines Detektorgehäuses 300 mit einer Kühlkompresse 303, die hier als Manschette ausgeführt ist. Dies bedeutet, dass die Kompresse 303 umlaufend um die gesamte radiale Oberfläche des Detektors 300 verläuft. Dies ermöglicht ein Überstülpen der Manschette oder Kompresse 303 über einen Detektor, was Vorteile hinsichtlich des geringeren Befestigungsaufwandes bietet. Die Manschette 303 weist analog zu den vorgehenden Figuren eine erste Schicht 301 und eine zweite Schicht 302 auf, wobei die zweite Schicht 302 im Betrieb einen direkten Kontakt zum Außengehäuse des Detektors 300 bildet.

Durch den Anpressdruck der Manschette 303 wird ein fester Sitz der Manschette 303 auf dem zu kühlenden Detektorgehäuse 300 erreicht. Durch die Eigenschaft der Verformbarkeit kann sich die Innenwandung der zweiten Schicht 302 unter Aufbau eines Anpressdrucks der Oberflächenstruktur des Detektorgehäuses 300 anpassen und eine optimale thermische Kopplung erreichen.

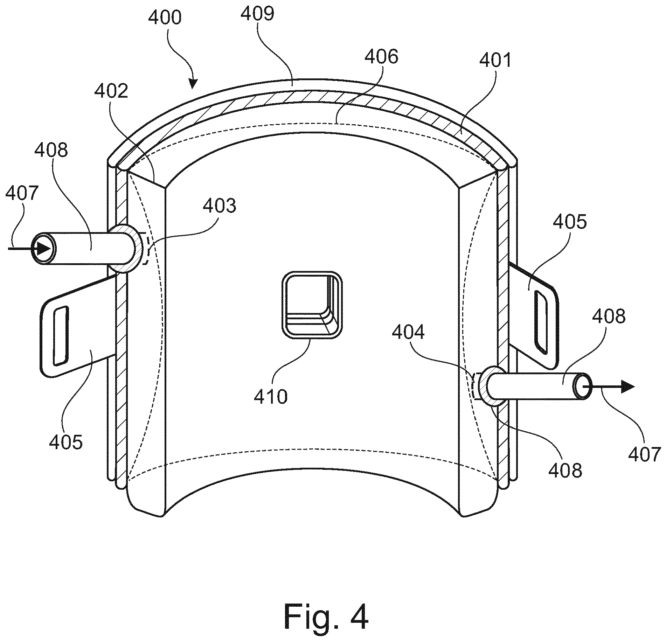

Fig. 4 zeigt den detaillierten Aufbau einer Kühlkompresse 400 gemäß einem Ausführungsbeispiel der Erfindung. Die Kühlkompresse 400 weist eine erste Schicht 401 auf, die mit einer zweiten Schicht 402 verbunden ist. Zwischen der ersten Schicht 401 und der zweiten Schicht 402 ist ein Hohlraum 406 ausgebildet, der zur Aufnahme des Kühlfluids 407 dient. Möglich ist auch ein in die zweite Schicht 402 selbst eingearbeiteter Hohlraum 406 oder ein geschäumtes Innenmaterial der zweiten Schicht 402, das das Kühlfluid 407 im Volumen des Materials der zweiten Schicht 402 aufnehmen kann.

Fig. 4 zeigt weiterhin eine Eintrittsöffnung 403 und eine Austrittsöffnung 404, die einen Zugang zum Hohlraum 406 von außen erlauben und die der Zuführung des Kühlfluids 407 zum Hohlraum 406 und der Abführung des Kühlfluids 407 aus dem Hohlraum 406 dienen. Gemäß einem Ausführungsbeispiel ist zur mechanischen Verstärkung die Eintrittsöffnung 403 und die Austrittsöffnung 404 jeweils als Muffe 408 vorgesehen. Über diese Muffe 408 kann mithilfe von Schläuchen oder Rohren das Kühlmittel 407 in die Kompresse 400 eingebracht werden.

Es sind weiterhin Befestigungselemente vorgesehen. In der Figur werden beispielhaft zwei Befestigungslaschen 405 gezeigt, mit deren Hilfe die Kühlkompresse 400 an Haltelementen auf der Gehäuseoberfläche angebracht werden kann.

Die Aussparung 410 dient dazu, Elemente der Gehäuseoberfläche, wie z.B. mechanische Befestigungsvorrichtungen, Anzeigen, Ventile, Anschlüsse, Zugänge und ähnliche Elemente weiterhin zugänglich zu halten und dabei die Kühlung des Gehäuses so wenig wie möglich zu beeinträchtigen. Die Aussparungen 410 sind so ausgeführt, dass an den Rändern der Aussparungen 410 kein Kühlfluid 407 austreten kann und ihre geometrische Form ist so gewählt, dass sie betreffenden Gehäuseelemente gut zugänglich und gleichzeitig die ausgesparte Fläche möglichst klein ist.

Das Material der zweiten Schicht 402 kann in einer Weise plastisch ausgeführt sein, die es erlaubt, dass die zweite Schicht 402 nach einem ersten Anpressen an die zu kühlende Gehäuseoberfläche diese Form beibehält und aushärtet. Beispielsweise kann dies mit harzbasierten Materialien erreicht werden. Dies führt zu einer dauerhaft beständigen Geometrie der Innenwandung der zweiten Schicht 402. Dies hat den Vorteil, dass auch ohne Überdruck des Kühlfluids 407 in der Kühlkompresse 400 die Kontaktfläche zwischen der Kühlkompresse 400 und der Außenfläche des Gehäuses vergrößert wird und der thermische Kontakt verbessert wird.

Dies bedeutet eine Vereinfachung des Kühlmechanismus, da kein Überdruck zur Erzeugung eines Anpressdrucks mehr aufgebaut werden muss.

Ein entsprechendes Verfahren zur Herstellung einer Ausformung einer Innenwandung der zweiten Schicht 402 weist folgende Schritte auf: Anlegen der Kühlkompresse 400; Anpressen der Kühlkompresse 400 an die Gehäuseoberfläche; Befestigen der Kühlkompresse 400; Aushärten der zweiten Schicht 402.

An der Außenseite der zweiten Schicht 402 ist eine weitere Schicht 409 angebracht, die aus einem widerstandsfähigen Material wie beispielsweise Textilgewebe, Metallgewebe oder Kevlar besteht. Mit dieser zusätzlichen Schicht 409 kann die Kühlmanschette 400 vor mechanischen, aber auch extremen thermischen Einflüssen geschützt werden. Weiterhin verringert dies die Wahrscheinlichkeit der versehentlichen Beschädigung der Kühlkompresse 400 beim Anbringen oder bei der Wartung.

Wenn hier von "Hohlraum" die Rede ist, so ist die Eigenschaft der Kompresse 400 gemeint, das Kühlfluid in einer geeigneten Weise in Ihrem Inneren aufzunehmen und dabei das Volumen der Kompresse 400 insgesamt zu erhöhen.

Die Hohlräume für das Kühlfluid 407 können auch erst dann ausgebildet werden, wenn das Kühlfluid 407 in die Kühlkompresse 400 strömt. In anderen Worten muss eine Kühlkompresse 400, wenn sie nicht vom Kühlfluid 407 durchströmt wird, nicht notwendigerweise einen Hohlraum 406 enthalten. Dieser kann sich, je nach Ausführung der zweiten Schicht 402, erst mit der Einleitung des Kühlfluids 407 aufgrund des verformbaren Materials der zweiten Schicht 402 ausbilden.

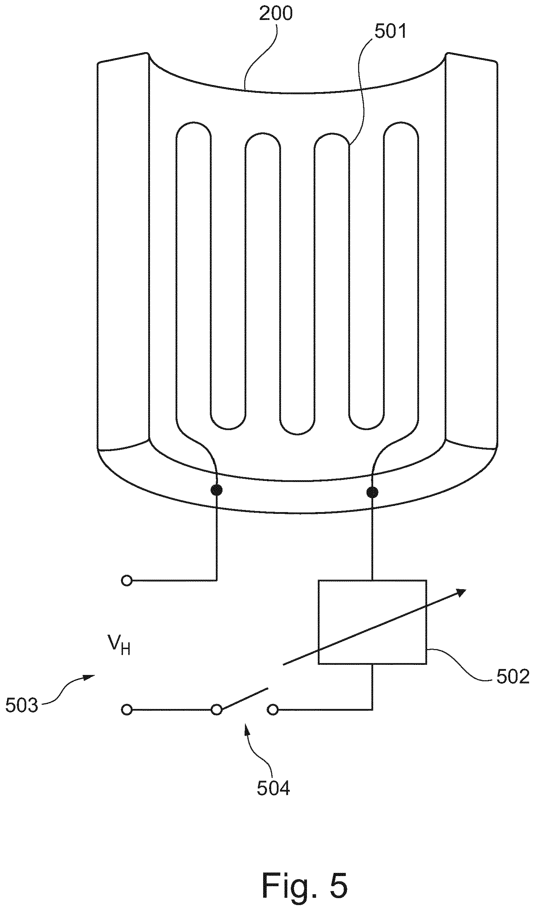

Fig. 5 zeigt eine Kühlkompresse 200 mit einem elektrisch arbeitenden Heizelement gemäß einem Ausführungsbeispiel der Erfindung. Bei dieser Ausführungsform kann eine Temperierung auf eine Soll-Temperatur erfolgen, die höher ist als die Ist-Temperatur des Gehäuses. Das Heizelement weist eine Heizwendel 501 auf, die auf eine Weise in die Kühlkompresse 200 eingearbeitet ist, dass sie zu einer Erwärmung der Bereiche der Kühlkompresse führt, die Kontakt zur Oberfläche des Gehäuses haben.

Weiterhin ist eine Versorgungsspannungsquelle 503 dargestellt, die zusammen mit einem Regler 502 und einem Schalter 504 den Versorgungsstromkreis bildet. Der Regler 502 dient zur Regelung und Steuerung der elektrischen Heizleistung des Heizelements 501. Der Schalter 504 dient zum Einschalten oder Ausschalten des Heizelements 501.

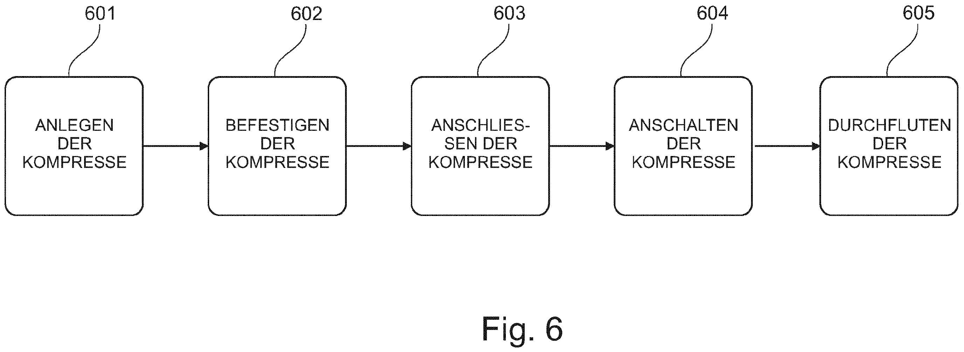

Fig. 6 zeigt ein Flussdiagramm eines Verfahrens zur Temperierung eines Detektors 201 mit einer Kühlkompresse 200. In Schritt 601 wird die Kompresse 200 an das Gehäuse angelegt. Hierbei soll der Bereich der Außenfläche des Gehäuses abgedeckt werden, der temperiert werden soll. In Schritt 602 wird die Kompresse beispielsweise mit Bändern, Laschen, Klettverschlüssen oder dergleichen am Gehäuse befestigt. In Schritt 603 wird die Kompresse an den Kühlkreislauf des Kühlfluids angeschlossen sowie gegebenenfalls die elektrischen Leitungen für das Heizelement 501 angeschlossen. In Schritt 604 folgt das Anschalten der Kompresse. Dies bedeutet, dass das Pumpen des Kühlfluids einsetzt und optional der Stromkreis des Heizelements mit Spannung versorgt und mit dem Schalter 504 eingeschaltet wird.

Im letzten Schritt 605 wird die Kühlkompresse von dem Kühlfluid durchströmt, wobei sich zumindest ein Bereich der zweiten Schicht 402 durch den erhöhten Druck des Kühlfluids 407 auf den entsprechenden Bereich der Außenfläche des Detektors 201 zubewegt und einen thermischen Kontakt mit einem entsprechenden Bereich der Außenfläche des Detektors 201 zu bildet.

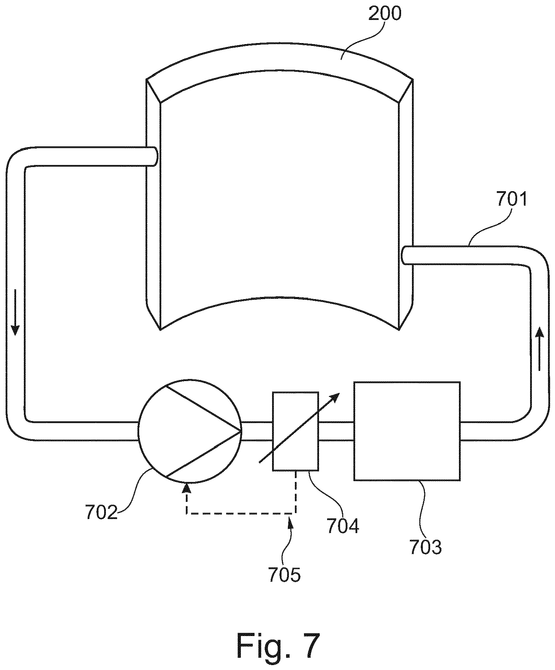

Fig. 7 zeigt gemäß einem Ausführungsbeispiel der Erfindung einen Kühlkreislauf, der eine Kühlkompresse 200, ein Transportsystem 701 für das Kühlfluid 407, eine Pumpe 702, eine Kühleinheit 703 sowie eine Regelungs- oder Steuereinheit 704 aufweist. Das Transportsystem 701 dient zum Transport des Kühlfluids durch die Komponenten des Kühlkreislaufs. Typischerweise werden hier Rohre oder Schläuche verwendet, die die einzelnen Komponenten des Kühlkreislaufs verbinden. Die regelbare Pumpe 702 sorgt zum einen für den Transport des Kühlfluids 407 durch den Kühlkreislauf, zusätzlich erzeugt sie den für das Anpressen der Kühlkompresse notwendigen Überdruck des Kühlfluids 407. Weiterhin weist die Kühlanordnung eine Regelungs- und Steuereinheit zur Regelung des Drucks des Kühlfluids 407 auf, um einen definierten und möglichst konstanten Anpressdruck in der Kühlkompresse zu erzeugen. Die Regelungs- und Steuereinheit 704 erzeugt eine Regelgröße 705, die an die Pumpensteuerung weitergeleitet wird und damit die Beeinflussung des Drucks des Kühlfluids 407 erlaubt. Es wird zur zweckgemäßen Funktion der Kühlkompresse 200 ein möglichst konstanter Druck des Kühlfluids 407 und damit des Anpressdrucks der Kompresse an der Gehäuseoberfläche erzeugt.

Der Vorteil der Erfindung besteht darin, dass durch die Verformbarkeit des Kühlkörpers die Kontaktfläche zwischen dem Kühlkörper und der Außenwand des Gehäuses vergrößert wird. Darüber hinaus wird durch den Anpressdruck der Kühlkompresse an das Gehäuse auch die Wärmeleitfähigkeit zwischen Kühlkörper und Außenfläche des Gehäuses verbessert. Aussparungen bieten zudem die Möglichkeit, Elemente der Gehäuseoberfläche weiterhin zugänglich zu halten. Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, soweit dies durch die Patentansprüche abgedeckt ist. Bezugszeichen in den Ansprüchen sind nicht als Einschränkungen anzusehen.

## Patentansprüche

1. Füllstandmessgerät (112, 110) mit einer Kühlkompresse (200, 303, 400) zum Kühlen oder Temperieren eines Detektors (201) des Füllstandmessgeräts (112, 110) während einer Füllstandmessung, die Kühlkompresse (200, 303, 400) aufweisend:
einen Kühlkörper (202), der zumindest teilweise aus einem verformbaren Material besteht;
wobei der Kühlkörper (202) zum Anbringen an den Detektor (201) ausgeführt ist;
wobei der Kühlkörper (202) zum Durchströmen mit einem Kühlfluid (205) ausgeführt ist;
wobei zumindest ein Bereich einer Innenwandung (204) des Kühlkörpers (202) ausgeführt ist, sich auf einen entsprechenden Bereich einer Außenfläche des Detektors (201) zuzubewegen, um einen thermischen Kontakt mit dem entsprechenden Bereich der Außenfläche zu bilden, wenn die Kühlkompresse (200, 303, 400) an den Detektor (201) angebracht ist und der Kühlkörper (202) von dem Kühlfluid (205) durchströmt wird.

2. Füllstandmessgerät nach Anspruch 1, wobei die Kühlkompresse als Manschette (301) zum Stülpen über den Detektor (300) ausgeführt ist.

3. Füllstandmessgerät nach Anspruch 1, die Kühlkompresse weiterhin aufweisend:
eine erste Schicht (401), welche eine Außenwandung der Kühlkörpers (202) ausbildet;
eine zweite Schicht (402), welche die Innenwandung der Kühlkörpers (202) ausbildet;
eine Einleitungsöffnung (403);
eine Ausleitungsöffnung (404);
wobei die erste Schicht (401) und die zweite Schicht (402) auf eine Weise miteinander verbunden sind, dass sie einen Hohlraum (406) des Kühlkörpers (202) zur Aufnahme des Kühlfluids (407) ausbilden;
wobei ein Zugang zu diesem Hohlraum (406) über die Einleitungsöffnung (403) oder die Ausleitungsöffnung (404) erfolgt;
wobei das Kühlfluid (407) beim Betrieb der Kühlkompresse (200, 303, 400) unter einem Druck steht, der größer ist, als der Druck des den Kühlkörper (202) umgebenden Mediums;
wobei die zweite Schicht (402) aus einem verformbaren und wärmeleitenden Material besteht; und
wobei sich das Volumen der Kompresse durch Einleiten des Kühlfluids (407) in den Kühlkörper (202) vergrößert.

4. Füllstandmessgerät nach Anspruch 3, weiteraufweisend eine Befestigungsvorrichtung (405) zum Halten der Kühlkompresse (200, 303, 400) am Detektor (201).

5. Füllstandmessgerät nach einem der Ansprüche 3 oder 4,
wobei auf der Außenseite der ersten Schicht (401) eine Schicht (409) aus Textilgewebe, Kevlar oder ähnlichem Material angeordnet ist.

6. Füllstandmessgerät nach einem der Ansprüche 3 bis 5,
wobei die Einleitungsöffnung (403) und/oder die Ausleitungsöffnung (404) als Muffe (408) ausgeführt ist.

7. Füllstandmessgerät nach einem der vorhergehenden Ansprüche,
wobei die Kühlkompresse (200, 303, 400) ein elektrisch betriebenes Heizelement (501) zum Wärmen des Kühlfluids (407) aufweist.

8. Füllstandmessgerät nach einem der vorhergehenden Ansprüche;
wobei die Kühlkompresse (200, 303, 400) Aussparungen (410) aufweist, die in einer Weise ausgeführt sind, dass Elemente der Gehäuseoberfläche des Detektors (201) von außen zugänglich sind, wenn die Kühlkompresse am Detektor angebracht ist.

9. Füllstandmessgerät (112, 110) nach einem der vorhergehenden Ansprüche, wobei die Innenwandung (204) des Kühlkörpers (202) an der zu temperierenden Gehäuseoberfläche des Detektors (201) konturnah anliegt.

10. Füllstandmessgerät (112, 110) nach einem der vorhergehenden Ansprüche,
wobei die Kühlkompresse (200, 303, 400) eine Aussparung (410) aufweist, die in einer Weise ausgeführt ist, dass Elemente der Gehäuseoberfläche des Detektors (201) durch die Aussparung (410) hindurchgeführt sind und somit von außen zugänglich sind.

11. Verwendung einer Kühlkompresse (200, 303, 400) zur Kühlung eines Gehäuses eines Messgerätes, die Kühlkompresse (200, 303, 400) aufweisend:
einen Kühlkörper (202), der zumindest teilweise aus einem verformbaren Material besteht;
wobei der Kühlkörper (202) zum Anbringen an einen Detektor (201) ausgeführt ist;
wobei der Kühlkörper (202) zum Durchströmen mit einem Kühlfluid (205) ausgeführt ist;
wobei zumindest ein Bereich einer Innenwandung (204) des Kühlkörpers (202) ausgeführt ist, sich auf einen entsprechenden Bereich einer Außenfläche des Detektors (201) zuzubewegen, um einen thermischen Kontakt mit dem entsprechenden Bereich der Außenfläche zu bilden, wenn die Kühlkompresse (200, 303, 400) an den Detektor (201) angebracht ist und der Kühlkörper (202) von dem Kühlfluid (205) durchströmt wird.

12. Verwendung nach Anspruch 11, wobei das Gehäuse ein Gehäuse eines Detektors (201) eines Füllstandmessgerätes (112) ist.

13. Verfahren zum Temperieren eines Detektors (201) mit einer Kühlkompresse (200, 303, 400), das Verfahren aufweisend die Schritte:
Durchströmen der Kühlkompresse (200, 303, 400) mit einem Kühlfluid (205), wobei der Druck des Kühlfluids (205) innerhalb des Kühlkörpers (202) größer ist als der Druck des den Kühlkörper (202) umgebenden Mediums, wodurch sich zumindest ein Bereich einer Innenwandung (204) des Kühlkörpers (202) auf einen entsprechenden Bereich einer Außenfläche des Detektors (201) zubewegt, um einen thermischen Kontakt mit dem entsprechenden Bereich der Außenfläche des Detektors (201) zu bilden, wenn der Kühlkörper (202) von dem Kühlfluid (205) durchströmt wird.

## Claims

1. A level measuring device (112, 110) comprising a cooling compress (200, 303, 400) for cooling or tempering a detector (201) of said level measuring device (112, 110) during a level measurement, said cooling compress (200, 303, 400) comprising:
a cooling body (202) consisting at least partially of a deformable material;
wherein the cooling body (202) is adapted to be attached to the detector (201);
wherein the cooling body (202) is adapted for through-flow of a cooling fluid (205);
wherein at least a portion of an inner wall (204) of the cooling body (202) is adapted to move toward a corresponding portion of an outer surface of the detector (201) to form thermal contact with the corresponding portion of the outer surface when the cooling compress (200, 303, 400) is attached to the detector (201) and the cooling fluid (205) flows through the cooling body (202).

2. Level measuring device according to claim 1, wherein the cooling compress is designed as a sleeve (301) for inverting over the detector (300).

3. Level measuring device according to claim 1, the cooling compress still showing:
a first layer (401) forming an outer wall of said cooling body (202);
a second layer (402) forming the inner wall of the cooling body (202);
an inlet opening (403);
a discharge opening (404);
wherein the first layer (401) and the second layer (402) are joined together in a manner to form a cavity (406) of the cooling body (202) for receiving the cooling fluid (407);
wherein access to said cavity (406) is provided via said inlet opening (403) or said outlet opening (404);
during operation of the cooling compress (200, 303, 400), the cooling fluid (407) being under a pressure which is greater than the pressure of the medium surrounding the cooling body (202);
wherein the second layer (402) consits of a deformable and thermally conductive material; and wherein the volume of the compress increases by introducing the cooling fluid (407) into the cooling body (202).

4. Level measuring device according to claim 3 further comprising a fastening device (405) for holding the cooling compress (200, 303, 400) on the detector (201).

5. Level measuring device according to any of claims 3 or 4, wherein a layer (409) of textile fabric, Kevlar or similar material is arranged on the outside of the first layer (401).

6. Level measuring device according to any of claims 3 to 5, wherein the inlet opening (403) and/or the outlet opening (404) is designed as a bushing (408).

7. Level measuring device according to any of the preceding claims, wherein the cooling compress (200, 303, 400) comprises an electrically operated heating element (501) for heating the cooling fluid (407).

8. Level measuring device according to any of the preceding claims; wherein the cooling compress (200, 303, 400) comprises recesses (410) made in such a way that elements of the housing surface of the detector (201) are accessible from outside when the cooling compress is attached to the detector.

9. Level measuring device (112, 1 10) according to any of the preceding claims, wherein the inner wall (204) of the cooling body (202) lying close to the contour of the housing surface of the detector (201) to be tempered.

10. Level measuring device (112, 110) according to any of the preceding claims, wherein the cooling compress (200, 303, 400) having a recess (410) which is designed in such a way that elements of the housing surface of the detector (201) are passed through the recess (410) and are thus accessible from the outside.

11. Using a cooling compress (200, 303, 400) for cooling a housing of a measuring device, said cooling compress (200, 303, 400) comprising:
a cooling body (202) consisting at least partially of a deformable material;
wherein the cooling body (202) is adapted to be attached to a detector (201);
wherein the cooling body (202) is adapted for through-flow of a cooling fluid (205);
wherein at least a portion of an inner wall (204) of the cooling body (202) is adapted to move toward a corresponding portion of an outer surface of the detector (201) to form thermal contact with the corresponding portion of the outer surface when the cooling compress (200, 303, 400) is attached to the detector (201) and the cooling fluid (205) flows through the cooling body (202).

12. Use according to claim 11, wherein the housing is a housing of a detector (201) of a level measuring device (112).

13. Method for tempering a detector (201) with a cooling compress (200, 303, 400), said method comprising the steps of:
Trough-flow the cooling compress (200, 303, 400) with a cooling fluid (205), the pressure of the cooling fluid (205) within the cooling body (202) being greater than the pressure of the medium surrounding the cooling body (202), whereby at least a portion of an inner wall (204) of the cooling body (202) moves toward a corresponding portion of an outer surface of the detector (201) to form thermal contact with the corresponding portion of the outer surface of the detector (201) as the cooling fluid (205) flows through the cooling body (202).

## Revendications

1. Dispositif de mesure de niveau (112, 110) comportant une compresse de refroidissement (200, 303, 400) destinée à refroidir un détecteur (201) du dispositif de mesure de niveau (112, 110) ou à équilibrer température de celui-ci pendant une mesure de niveau, la compresse de refroidissement (200, 303, 400) présentant :
un corps de refroidissement (202), qui est réalisé au moins en partie d'un matériau déformable ;
dans lequel le corps de refroidissement (202) est configuré pour être rapporté sur le détecteur (201) ;
dans lequel le corps de refroidissement (202) est configuré pour être traversé par un fluide de refroidissement (205) ;
dans lequel au moins une zone d'une paroi intérieure (204) du corps de refroidissement (202) est configurée pour se rapprocher à une zone correspondante d'une surface extérieure du détecteur (201) afin de former un contact thermique avec la zone correspondante de la surface extérieure lorsque la compresse de refroidissement (200, 303, 400) est rapportée sur le détecteur (201) et que le corps de refroidissement (202) est traversé par le fluide de refroidissement (205).

2. Dispositif de mesure de niveau selon la revendication 1, dans lequel la compresse de refroidissement est configurée sous la forme d'une coupelle (301) pour être coiffée sur le détecteur (300).

3. Dispositif de mesure de niveau selon la revendication 1, la compresse de refroidissement présentant en outre :
une première couche (401), qui forme une paroi extérieure du corps de refroidissement (202) ;
une seconde couche (402), qui forme la paroi intérieure du corps de refroidissement (202) ;
un orifice d'entrée (403) ;
un orifice de sortie (404) ;
dans lequel la première couche (401) et la seconde couche (402) sont reliées l'une à l'autre de telle sorte qu'elles forment une cavité (406) du corps de refroidissement (202) pour recevoir le fluide de refroidissement (407) ;
dans lequel un accès à cette cavité (406) se fait par le biais de l'orifice d'entrée (403) ou de l'orifice de sortie (404) ;
dans lequel le fluide de refroidissement (407), lors du fonctionnement de la compresse de refroidissement (200, 303, 400), se trouve sous une pression supérieure à la pression du milieu entourant le corps de refroidissement (202) ;
dans lequel la seconde couche (402) est réalisé d'un matériau déformable et conducteur de chaleur ; et
dans lequel le volume de la compresse augmente lors de l'entrée du fluide de refroidissement (407) dans le corps de refroidissement (202).

4. Dispositif de mesure de niveau selon la revendication 3, présentant en outre un moyen de fixation (405) destiné à maintenir la compresse de refroidissement (200, 303, 400) sur le détecteur (201).

5. Dispositif de mesure de niveau selon une des revendications 3 ou 4,
dans lequel, sur la face extérieure de la première couche (401), est disposée une couche (409) en tissu textile, en Kevlar ou en matériau similaire.

6. Dispositif de mesure de niveau selon une des revendications 3 à 5,
dans lequel l'orifice d'entrée (403) et/ou l'orifice de sortie (404) est configuré sous la forme d'un manchon (408).

7. Dispositif de mesure de niveau selon une des revendications précédentes,
dans lequel la compresse de refroidissement (200, 303, 400) présente un élément chauffant électrique (501) destiné à réchauffer le fluide de refroidissement (407).

8. Dispositif de mesure de niveau selon une des revendications précédentes,
dans lequel la compresse de refroidissement (200, 303, 400) présente des évidements (410) qui sont configurés de telle sorte que des éléments de la surface du boîtier du détecteur (201) sont accessibles de l'extérieur lorsque la compresse de refroidissement est rapportée sur le détecteur.

9. Dispositif de mesure de niveau (112, 110) selon une des revendications précédentes, dans lequel la paroi intérieure (204) du corps de refroidissement (202) s'appuie à proximité du contour de la surface du boîtier du détecteur (201) dont la température est à contrôler.

10. Dispositif de mesure de niveau (112, 110) selon une des revendications précédentes, dans lequel la compresse de refroidissement (200, 303, 400) présente un évidement (410) qui est configuré de telle sorte que des éléments de la surface du boîtier du détecteur (201) traversent l'évidement (410) et sont donc accessibles de l'extérieur.

11. Utilisation d'une compresse de refroidissement (200, 303, 400) pour refroidir un boîtier d'un dispositif de mesure, la compresse de refroidissement (200, 303, 400) présentant :
un corps de refroidissement (202), qui est réalisé au moins en partie d'un matériau déformable ;
dans lequel le corps de refroidissement (202) est configuré pour être rapporté sur un détecteur (201) ;
dans lequel le corps de refroidissement (202) est configuré pour être traversé par un fluide de refroidissement (205) ;
dans lequel au moins une zone d'une paroi intérieure (204) du corps de refroidissement (202) est configurée pour se rapprocher à une zone correspondante d'une surface extérieure du détecteur (201) afin de former un contact thermique avec la zone correspondante de la surface extérieure lorsque la compresse de refroidissement (200, 303, 400) est rapportée sur le détecteur (201) et que le corps de refroidissement (202) est traversé par le fluide de refroidissement (205).

12. Utilisation selon la revendication 11, dans laquelle le boîtier est un boîtier d'un détecteur (201) d'un dispositif de mesure de niveau (112).

13. Procédé destiné à contrôler la température d'un détecteur (201) avec une compresse de refroidissement (200, 303, 400), le procédé présentant les étapes consistant à :
faire traverser la compresse de refroidissement (200, 303, 400) par un fluide de refroidissement (205), la pression du fluide de refroidissement (205) à l'intérieur du corps de refroidissement (202) étant supérieure à la pression du milieu entourant le corps de refroidissement (202), ce qui permet de rapprocher au moins une zone d'une paroi intérieure (204) du corps de refroidissement (202) vers une zone correspondante d'une surface extérieure du détecteur (201) afin de former un contact thermique avec la zone correspondante de la surface extérieure du détecteur (201) lorsque le corps de refroidissement (202) est traversé par le fluide de refroidissement (205).
